# EUROPÄISCHE PATENTSCHRIFT

(11) **EP 3 126 159 B1**
(45) Veröffentlichungstag und Bekanntmachung des Hinweises auf die Patenterteilung: **05.07.2023**
(21) Anmeldenummer: 15722165.6
(22) Anmeldetag: 08.05.2015
(51) Int. Cl.: B60C 11/18

(54) **ANORDNUNG, SYSTEM UND VERFAHREN ZUM INDUKTIVEN ÜBERTRAGEN VON ENERGIE FÜR DAS LADEN MINDESTENS EINES ENERGIESPEICHERS EINES SCHIENENFAHRZEUGS**
ARRANGEMENT, SYSTEM, AND METHOD FOR INDUCTIVELY TRANSMITTING ENERGY FOR CHARGING AT LEAST ONE ENERGY STORE OF A RAIL VEHICLE
DISPOSITIF, SYSTÈME ET PROCÉDÉ DE TRANSMISSION D'ÉNERGIE PAR INDUCTION POUR LA CHARGE D'AU MOINS UN ACCUMULATEUR D'ÉNERGIE D'UN VÉHICULE FERROVIAIRE

(30) Priorität: 20.05.2014 DE 102014209501
(43) Veröffentlichungstag der Anmeldung: 08.02.2017
(73) Patentinhaber: Siemens Mobility GmbH, 81739 München (DE)
(72) Erfinder: FISCHPERER, Rolf, 91338 Igensdorf (DE); MEINERT, Michael, 91056 Erlangen (DE); SCHUTZ, Jean, 68809 Neulußheim (DE); HELFRICH, Jens, 67346 Speyer (DE); MAST, Jochen, 73773 Aichwald (DE)
(74) Vertreter: Siemens Patent Attorneys
(86) Internationale Anmeldenummer: PCT/EP2015/060153
(87) Internationale Veröffentlichungsnummer: WO 2015/176971

(56) Entgegenhaltungen:
- US-A- 5 654 621
- US-A1- 2011 227 420
- US-A1- 2012 161 530
- US-A1- 2013 270 919
- US-A1- 2014 015 329
- US-A1- 2014 055 090
- US-A1- 2014 091 637
- US-A1- 2014 125 142

## Beschreibung

Die Erfindung betrifft eine Anordnung zum induktiven Übertragen von Energie für das Laden eines Energiespeichers eines Schienenfahrzeugs gemäß dem Oberbegriff des Anspruchs 1 sowie ein System gemäß Anspruch 12 und ein Verfahren gemäß Anspruch 23.

Es ist bekannt, die Energiespeicher von elektrisch betriebenen Fahrzeugen wie etwa Elektroautos, Elektrobussen oder für oberleitungsloses Fahren geeigneten Straßenbahnen mittels in der Fahrbahn bzw. im Schienengleis eingelassenen Energieübertagungseinrichtungen induktiv zu laden. Auf der Website www.wampfler.com (Bereich "Energy & Data transmission / Inductive Power Transfer IPT") sind Fahrzeuge zu sehen, die beim Halt über einem Ladebereich geladen werden. Dies geschieht, indem mit einer Mechanik eine Energieaufnahmeeinrichtung vom Fahrzeug auf die Energieübertragungseinrichtung abgelassen wird, so dass stets ein vorgegebener Luftspalt zwischen Energieübertagungseinrichtung und Energieaufnahmeeinrichtung einstellbar ist.

Soll der Einsatz einer solchen Mechanik zum Anpassen des Luftspalts zwischen Energieaufnahmeeinrichtung und Energieübertragungseinrichtung vermieden werden, müssen die Parameter der Energieübertragung, insbesondere zur Ausbildung einer Resonanz, je nach Abstand angepasst werden. Dies kann beispielsweise durch Anpassen der Wechselspannungsfrequenz bei der Energieübertragung erfolgen.

Aus der EP2415627 A2 ist eine gattungsgemäße Anordnung zum induktiven Übertragen von Energie für das Laden eines Energiespeichers eines Fahrzeugs bekannt, bei der fahrzeugseitig die Effizienz der Energieübertragung gemessen und an eine fahrbahnseitige Regelungseinrichtung übertragen wird, die mittels Anpassung der Wechselspannungsfrequenz eine effiziente Energieübertragung ermöglicht. Dabei muss die Datenübertragung zwischen dem Fahrzeug und der fahrbahnseitigen Regelungseinrichtung sehr schnell und zuverlässig erfolgen, um stets auf einen sich verändernden Abstand, zum Beispiel durch Veränderung des Federabstands beim Ein- und Aussteigen von Personen in das Fahrzeug, reagieren zu können.

Aus der US 2014/0125142 A1 ist ein "charging system of electric vehicles" bekannt, welches "in a noncontact manner by resonant magnetic field" "wirelessly transmit an inputted power from a power transmitting antenna including a first resonant circuit, toward a power receiving antenna that includes a second resonant circuit".

Aus der US 5 654 621 A ist ein "arrangement and method for contactless charging the battery of a vehicle, in particular an electric car, by means of an inductive transmitter" bekannt.

Aus der US 2011/0227420 A1 ist u.a. ein "wireless power transmission system" bekannt, bei welchem "power is fed from a power feeding coil to a power receiving coil by magnetic resonance."

Es ist die Aufgabe der Erfindung, eine gattungsgemäße Anordnung anzugeben, die geeignet ist, bei einem variablen Abstand zwischen Energieübertragungseinrichtung und Energieaufnahmeeinrichtung vergleichsweise einfach, schnell und sicher eine Energieübertragung zu ermöglichen.

Die Erfindung löst diese Aufgabe durch eine Anordnung zum induktiven Übertragen von Energie für das Laden eines Energiespeichers eines Schienenfahrzeugs gemäß Anspruch 1.

Dabei ist es vorgesehen, dass das erste Induktionselement der Anordnung als Übertrager von elektrischer Energie dient und diese elektrische Energie über einen variablen Luftspalt an ein zweites Induktionselement, das bevorzugt einem Fahrzeug zugeordnet ist, übertragen werden kann. Der variable Abstand ist dann beispielsweise durch die Bodenfreiheit des Fahrzeuges vorgegeben. Im Rahmen der vorliegenden Erfindung wird als Primärseite der übertragende Teil und als Sekundärseite der empfangende Teil bezeichnet.

Die Primärseite kann dabei beispielsweise direkt aus einem Gleichstromnetz wie z.B. einer Gleichstrom-Bahnenergieversorgung mit Elektrizität versorgt werden.

Es ist ein Vorteil der erfindungsgemäßen Anordnung, dass sie einen Energiespeicher eines Schienenfahrzeugs ohne eine mechanische Anpassung der Größe des Luftspalts laden kann, was die Einsetzbarkeit im Schienenverkehr unter unterschiedlichen Beladungszuständen eines Fahrzeugs erleichtert. Dabei ist es im Vergleich zur bekannten Anordnung ein besonderer Vorteil, dass eine Regelung der Energieübertragung schnell und sicher erfolgen kann.

Es ist ein weiterer Vorteil der erfindungsgemäßen Anordnung, dass eine hohe Übertragungsleistung bei einfachem und kompaktem mechanischem Aufbau gewährleistet werden kann. Ein Absenken beispielsweise eines Fahrzeugs zur Ausbildung eines vorgegebenen Abstands zwischen den Induktionselementen ist nicht erforderlich. Die Anordnung kann bei unterschiedlichen Luftspalten, wie sie beispielsweise beim Betrieb eines Fahrzeugs bedingt durch Radverschleiß und Einfederung des Fahrzeuges vorkommen, optimal (d.h. im Resonanzpunkt bei maximaler Übertragungseffizienz) arbeiten und gleichzeitig die beim Fahren erforderliche Bodenfreiheit gewährleisten, insbesondere auch bei Niederflurfahrzeugen mit begrenztem Einbauraum.

Durch den veränderlichen Abstand zwischen Primärteil und Sekundärteil verändern sich die magnetischen Parameter im so genannten Übertragerkreis, d.h. in der erfindungsgemäßen Anordnung, insbesondere die Streuinduktivitäten und die Hauptinduktivitäten, wodurch sich der Resonanzpunkt der Energieübertragung verändert. Dieser neue Resonanzpunkt kann durch das erfindungsgemäße Nachregelprinzip schnell und sicher erreicht werden, um eine effiziente Energieübertragung sicher zu stellen.

Zum Gewährleisten einer optimalen Leistungsübertragung erfolgt die Einspeisung des Primärteils im Resonanzpunkt. Dazu wird eine Regelungseinrichtung verwendet, die den Resonanzpunkt selbsttätig findet und bei Veränderungen im magnetischen Kreis automatisch nachführt.

Die Regelungseinrichtung regelt den Resonanzpunkt wie folgt:
Es wird festgelegt, bei welchem Leistungsabgabewert im Primärteil die Energieübertragung beabsichtigt ist (im Allgemeinen ist dies im Resonanzpunkt bei maximaler Effizienz der Energieübertagung), unabhängig von der Geometrie (Luftspalt). Die Wechselspannungsfrequenz wird zu Beginn auf den oberen Grenzwert eingestellt; der Leistungsabgabewert wird gemessen, z.B. über den Versatz der Nulldurchgänge zwischen vorgegebener Primärspannung und daraus resultierendem Primärstrom. Anschließend wird die Wechselspannungsfrequenz so lange erniedrigt, bis der gewünschte Leistungsabgabewert vorliegt. Die Energieübertragung erfolgt anschließend bei dieser Frequenz (z.B. im Resonanzpunkt). Ein weiteres Absenken der Frequenz ist nicht vorgesehen, da unterhalb der Resonanzfrequenz die Effizienz der Leistungsübertragung wieder abnimmt. Zum Einstellen der Frequenz wird der Hochfrequenz-Wechsel-richter benutzt, der ohnehin zur Energieübertragung vorhanden sein muss.

Eine Nachregelung des Resonanzpunkts muss erfolgen, wenn dieser sich während des Ladevorgangs verändert, z.B. aufgrund von zu-/aussteigenden Fahrgästen. Die Veränderung des Luftspaltes bewirkt eine Veränderung der Induktivitäten der Anordnung. Da die Kompensationskondensatoren einen festen Wert haben, verändert sich der Resonanzpunkt. Durch die Veränderung des Resonanzpunktes verändert sich ebenfalls die Phasenlage. Die Phasenlage wird von der Regelungseinrichtung automatisch erkannt und nachgeregelt.

Falls die zu übertragende Leistung verändert werden soll, z.B. weil die fahrzeugseitigen Energiespeicher voll und nur noch Leistung für die Hilfsbetriebe benötigt wird, so kann dies der Anordnung durch ein Signal (handelsübliche Funk-/Datenübertragungssysteme oder optische Systeme sind möglich) vom Fahrzeug mitgeteilt werden. Die Anordnung erhöht daraufhin die Frequenz. Dadurch wird der Resonanzpunkt verlassen, die Wirkanteile im Primärstrom gehen zurück, Blindanteile steigen an. Der Rückgang der Wirkanteile bewirkt, dass die übertragene Leistung verringert wird. Die Regelungseinrichtung erhöht die Frequenz so lange, bis die gewünschte Leistung erreicht ist.

Es weiterer Vorteil der erfindungsgemäßen Anordnung ist es, einen Schutz vor Überstrom bereit zu stellen. Erfindungsgemäß ist die Regelungseinrichtung geeignet bei zu hohen Strömen, die Ströme durch eine Erhöhung der Wechselspannungsfrequenz zu begrenzen. Dies ist ein Vorteil, weil so schnell die empfängerseitig aufgenommene Energie begrenzt wird und Schäden vermieden werden können.

Sollten z.B. aufgrund von Fehlern unzulässig hohe Ströme auftreten, so kann die Regelungseinrichtung sofort vergleichsweise große Frequenzen einstellen, so dass sehr hohe Impedanzen fernab des Resonanzpunkts vorliegen. Dadurch wird der übertragene Strom auf zulässige Werte begrenzt. Die Regelungseinrichtung kann in Betrieb bleiben und bei Beheben der (evtl. kurzzeitigen) Störung ohne weitere Maßnahmen weiterarbeiten. Da der Betrieb bevorzugt mit einer Übersetzung 1:1 zwischen Primärteil und Sekundärteil erfolgt und primärseitig ggf. zusätzlich Blindströme fließen, kann sekundärseitig der Strom nicht größer werden als primärseitig. Die Sekundärseite ist dadurch automatisch vor Überströmen geschützt. Der Stromgrenzwert kann darüber hinaus abhängig von der Phasenlage variabel vorgegeben werden, so dass ggfs. Betriebspunkte beherrscht werden, die zu sekundärseitig unzulässigen Größen führen könnten.

Ein weiterer Vorteil ist es, dass - wenn auf der Sekundärseite Wechselrichter vorgesehen werden - eine Energieübertragung in beide Richtungen möglich ist. Daher kann beispielsweise in bestimmten Situationen auch Energie aus einer Fahrzeugbatterie in einen stationären Energiespeicher zurückgespeist werden.

In einer bevorzugten Ausführungsform der erfindungsgemäßen Anordnung beträgt obere Grenzwert zwischen 15 kHz und 20 kHz. Dies ist ein Vorteil, weil sich bei diesen Frequenzen eine besonders effiziente Energieübertragung erreichen lässt und die Frequenzen oberhalb des menschlichen Hörspektrums liegen.

In einer weiteren bevorzugten Ausführungsform der erfindungsgemäßen Anordnung sind die Messeinrichtung und die Regelungseinrichtung dafür geeignet, als Leistungsabgabewert den Leistungsfaktor zu verwenden. Der Leistungsfaktor ist definiert als das Verhältnis von Wirkleistung zu Blindleistung. Dies ist von Vorteil, da sich mittels des Leistungsfaktors die Effizienz der Energieübertragung leicht messen lässt.

In einer weiteren bevorzugten Ausführungsform der erfindungsgemäßen Anordnung ist die Messeinrichtung dafür ausgebildet, den Leistungsfaktor mittels des Phasenunterschieds zwischen Spannung und Strom zu bestimmen. Diese Methode ist vorteilhaft, weil sie einfach anzuwenden ist.

In einer anderen bevorzugten Ausführungsform der erfindungsgemäßen Anordnung ist die Regelungseinrichtung dafür eingerichtet, als Standard bei der Energieübertragung einen Leistungsfaktor von 1 einzustellen. Dies ist ein Vorteil, weil bei einem Leistungsfaktor von 1 eine optimale Energieübertragung gewährleistet ist.

In einer anderen bevorzugten Ausführungsform der erfindungsgemäßen Anordnung ist eine Kommunikationseinrichtung vorgesehen, die geeignet ist, Signale über die zu übermittelnde Leistung und/oder einen aktuellen einzustellenden Leistungsfaktor zu empfangen und an die Regelungseinrichtung zu übermitteln. Dies ist ein Vorteil, weil so senderseitig (d.h. primärseitig) die empfängerseitig (d.h. sekundärseitig) gewünschte Energieaufnahme gesteuert werden kann.

In einer weiteren bevorzugten Ausführungsform der erfindungsgemäßen Anordnung ist die Regelungseinrichtung dafür eingerichtet, anhand der Signale durch eine Erhöhung der Wechselspannungsfrequenz einen Leistungsfaktor kleiner 1 einzustellen. Dies ist ein Vorteil, weil bei einem Leistungsfaktor kleiner 1 eine geringere Energieaufnahme auf der Empfängerseite eingestellt werden kann, z.B. im Falle einer bereits fast vollständig geladenen Batterie eines Fahrzeugs.

In einer weiteren bevorzugten Ausführungsform der erfindungsgemäßen Anordnung ist die Messeinrichtung dem mindestens einen ersten Induktionselement zugeordnet. Dies ist ein Vorteil, weil durch die senderseitige (d.h. primärseitige) Messung und daraus resultierende Einstellung der Wechselspannungsfrequenz der Energieübertragung eine sehr schnelle und sichere Einstellung der Eigenschaften der Energieübertragung erreicht werden kann. Insbesondere entfällt die Notwendigkeit, Messdaten von der Empfängerseite, also z.B. einem Fahrzeug zu übertragen, was länger dauert und störanfälliger ist.

In einer weiteren bevorzugten Ausführungsform der erfindungsgemäßen Anordnung ist die Regelungseinrichtung geeignet, die Wechselspannungsfrequenz innerhalb einer Zeitdauer von wenigen Wechselspannungsperioden, bevorzugt weniger als zwei Wechselspannungsperioden, zu regeln und den vorher festgelegten Effizienzwert einzustellen. Dies ist ein Vorteil, weil auf diese Weise eine besonders schnelle Anpassung der Energieübertragung gewährleistet ist.

In einer weiteren bevorzugten Ausführungsform der erfindungsgemäßen Anordnung ist mindestens ein erster Kompensationskondensator für das Kompensieren einer ersten Streuinduktivität vorgesehen, wobei der mindestens eine erste Kompensationskondensator in Reihe mit dem mindestens einen ersten Induktionselement geschaltet ist. Dies ist ein Vorteil, weil eine Schaltung in Reihenresonanz besonders gut für eine effiziente Energieübertragung geeignet ist. Der Aufbau eines induktiven Übertragers in Reihenresonanz ermöglicht einen Arbeitsbereich für die Wechselspannungsfrequenz mit einem stetigen Verlauf der Phase über der Frequenz, so dass die Regelungseinrichtung die gewünschte Phasenlage (insbesondere auch 0°) einregeln kann. Dadurch können unterschiedliche Transformatorenparameter (und auch Luftspalte) der Induktionselemente beherrscht und Leistungsvorgaben sowie Strombegrenzungen beachtet werden. Es ist ein weiterer Vorteil, dass die Bauweise in Reihenresonanz im Vergleich zur Bauweise in Parallelresonanz einen vergleichsweise guten Wirkungsgrad aufweist, eine hohe Leistungsübertagung ermöglicht und erfindungsgemäß einfach regelbar ist. Auf die sonst im Stand der Technik übliche "Parallelresonanz" (Kompensation sowohl der Streu- als auch der Hauptinduktivität durch Kompensationskondensatoren parallel zu den Transformatorklemmen) wird hier verzichtet.

In einer weiteren bevorzugten Ausführungsform der erfindungsgemäßen Anordnung ist das mindestens eine erste Induktionselement schienenseitig angeordnet. Dies ist ein Vorteil, weil auf diese Weise die Fahrbahn oder die Schiene durch ein Fahrzeug befahrbar ist, das dann zum Aufladen seiner Energiespeicher über dem ersten Induktionselement anhält.

In einer weiteren bevorzugten Ausführungsform der erfindungsgemäßen Anordnung ist eine Vorladeeinrichtung für das Vorladen eines Zwischenkreiskondensators des Wechselrichters vorhanden. Dies ist ein Vorteil, weil so auf einfache Weise der Zwischenkreiskondensator vorgeladen werden kann, bevor der Energieübertragungsvorgang beginnt.

In einer weiteren bevorzugten Ausführungsform der erfindungsgemäßen Anordnung weist die Anordnung einen Gleichspannungssteller auf, der dem Wechselrichter vorgeschaltet ist. Dies ist ein Vorteil, weil Anstelle der Vorgabe einer variablen Phase die Phase konstant bei 0° im Resonanzpunkt belassen werden kann. Um Änderungen von Leistung oder Strom zu ermöglichen, kann der Gleichspannungssteller die Netzspannung auf eine andere Spannung für den Wechselrichter umsetzen. Der Gleichspannungssteller kann dabei zur Glättung der Spannung mit Kondensatoren und Drosseln ausgestattet sein. Diese Elemente begrenzen jedoch die mögliche Verstellgeschwindigkeit der Spannung und damit von Leistung und Strom auf einige 10 ms, d.h. die Reaktionsgeschwindigkeit der Anordnung wird hierdurch begrenzt. Bei der erfindungsgemäßen Anordnung kann im Gegensatz dazu durch Verstellen der Frequenz quasi sofort (innerhalb einer Periode, d.h. im Bereich von 100 ps) reagiert werden.

Weiterhin ist ein System zum induktiven Übertragen von Energie für das Laden eines Energiespeichers eines Schienenfahrzeugs Teil der vorliegenden Erfindung, umfassend eine Anordnung nach einem der vorhergehenden Ansprüche und mindestens ein zweites Induktionselement, das in einem Abstand zu dem mindestens einen ersten Induktionselement angeordnet ist, wobei das zweite Induktionselement dem Schienenfahrzeug zugeordnet ist, und einen Gleichrichter für das Bereitstellen von Gleichspannung an den Energiespeicher, wobei mindestens ein zweiter Kompensationskondensator für das Kompensieren einer zweiten Streuinduktivität vorgesehen ist, wobei der mindestens eine zweite Kompensationskondensator in Reihe mit dem mindestens einen zweiten Induktionselement geschaltet ist.

In einer bevorzugten Ausführungsform des erfindungsgemäßen Systems ist, das mindestens eine zweite Induktionselement im Wesentlichen koplanar zu dem mindestens einen ersten Induktionselement angeordnet ist. Die koplanare Anordnung ist vorteilhaft, weil dadurch überall ein gleichmäßiger Abstand zwischen den Induktionselementen gegeben ist, was die Effizienz und die Regulierbarkeit der Energieübertragung verbessert.

In einer bevorzugten Ausführungsform des erfindungsgemäßen Systems sind die Induktionselemente gleich groß. Dies ist ein Vorteil, weil damit bei optimaler Positionierung der Induktionselemente zueinander eine besonders effiziente Energieübertragung bei vergleichsweise kleiner Bauweise erreicht werden kann.

In einer bevorzugten Ausführungsform des erfindungsgemäßen Systems ist eines der beiden mindestens einen Induktionselemente derart größer als das andere mindestens eine Induktionselement ausgebildet, dass Ungenauigkeiten beim Positionieren der Induktionselemente zueinander kompensierbar sind und eine volle Überdeckung des kleineren durch das größere Induktionselement sichergestellt ist. Dabei kann das größere Induktionselement, insbesondere auf der Primärseite, zwischen 5 % und 30 % länger und/oder breiter als das kleinere Induktionselement sein. Dies ist vorteilhaft, weil so z.B. ein Fahrzeug ohne größere Anpassungen seiner Position über einem auf dem Boden angeordneten Induktionselement geladen werden kann.

In einer anderen bevorzugten Ausführungsform des erfindungsgemäßen Systems weisen die Induktionselemente metallisches Kernmaterial (insbesondere Ferrite) zur Führung des magnetischen Feldes auf. Dies ist von Vorteil, weil so die Geometrie des magnetischen Feldes für eine optimale Energieübertragung gewählt werden kann. Weiterhin wird dadurch auch eine flache und großflächige Bauweise zum Einbau unter dem Fahrzeugboden sowie zum Führen einer hohen Energiedichte im Luftspalt ermöglicht. Die Form des Übertragers kann z.B. durch eine vorgefertigte Hülle aus Kunststoff definiert werden.

In einer anderen bevorzugten Ausführungsform des erfindungsgemäßen Systems weisen die Induktionselemente jeweils mindestens eine das Kernmaterial umschließende Spule aus Litzeleitern aufweisen. Dies ist vorteilhaft, weil Litzeleiter Verluste durch Wirbelströme unterbinden.

In einer anderen bevorzugten Ausführungsform des erfindungsgemäßen Systems weisen ist die Regelungseinrichtung geeignet, während der Energieübertragung ständig die Wechselspannungsfrequenz zu regeln, um Veränderungen des Abstands zwischen den Induktionselementen auszugleichen. Dies ist vorteilhaft, weil so z.B., wenn beim Ein- und Aussteigen von Passagieren eines Schienenfahrzeuges aufgrund der sich verändernden Beladungssituation der Abstand zwischen den Induktionselementen verändert wird, stets eine optimale Energieübertragung gewährleistet werden kann.

In einer anderen bevorzugten Ausführungsform des erfindungsgemäßen Systems beträgt der Abstand zwischen 70 mm und 300 mm, bevorzugt zwischen 80 mm und 250 mm, noch mehr bevorzugt zwischen 90 mm und 220 mm beträgt. Dies ist ein Vorteil, weil Nahverkehrs-Schienenfahrzeuge typische Bodenfreiheiten in diesem Bereich aufweisen.

In einer anderen bevorzugten Ausführungsform des erfindungsgemäßen Systems werden dem mindestens einen ersten und dem mindestens einen zweiten Induktionselement jeweils mehrere Kompensationskondensatoren zugeordnet, um die an einem einzelnen Kompensationskondensator anliegende Spannung zu begrenzen. Bevorzugt haben die Kompensationskondensatoren dabei die gleiche Kapazität.

In einer anderen bevorzugten Ausführungsform des erfindungsgemäßen Systems sind eine Mehrzahl von ersten Induktionselementen und eine Mehrzahl von zweiten Induktionselementen vorgesehen.

In einer anderen bevorzugten Ausführungsform des erfindungsgemäßen Systems umfasst der Gleichrichter schaltbare Halbleiterelemente, die dafür geeignet sind, durch Auslösen eines Kurzschlusses die an dem mindestens einen zweiten Induktionselement anliegende Spannung zu begrenzen.

Darüber hinaus ist ein Verfahren zum induktiven Übertragen von Energie für das Laden mindestens eines Energiespeichers eines Schienenfahrzeugs gemäß Anspruch 23 Teil der vorliegenden Erfindung.

Bevorzugte Ausführungsformen des erfindungsgemäßen Verfahrens ergeben sich aus den Ansprüchen 24 und 25. Es ergeben sich für das erfindungsgemäße Verfahren und dessen Ausführungsformen sinngemäß die gleichen Vorteile wie eingangs für die erfindungsgemäße Anordnung beschrieben.

In den Figuren sind bevorzugte Ausführungsbeispiele der Erfindung schematisch dargestellt. Die Merkmale der einzelnen Ausführungsbeispiele können dabei stets kombiniert werden, um weitere, nicht dargestellte Ausführungsbeispiele der Erfindung zu realisieren.

Es zeigen
- Figur 1: ein Ersatzschaltbild für ein in Reihenresonanz ausgebildetes System zum induktiven Übertragen von Energie,
- Figur 2: ein Zeigerdiagramm von Spannungen und Strömen, wie sie im Resonanzbetrieb der Anordnung gemäß Figur 1 auftreten,
- Figur 3: ein Liniendiagramm für den frequenzabhängigen Verlauf von Phase und Impedanz beim Betrieb eines Systems gemäß Figur 1,
- Figur 4: ein Ausführungsbeispiel eines Induktionselements,
- Figur 5: ein Liniendiagramm einer berechneten Frequenzabhängigkeit des Leistungsfaktors bei der Energieübertragung unter Berücksichtigung des Abstands zwischen den Induktionselementen,
- Figur 6: ein Ausführungsbeispiel eines erfindungsgemäßen Systems als Prinzipschaltbild,
- Figur 7: ein Strukturdiagramm der erfindungsgemäßen Regelung der Wechselspannungsfrequenz,
- Figur 8: ein Ausführungsbeispiel der erfindungsgemäßen Anordnung mit einer Abschalt- und einer Vorladeeinrichtung,
- Figur 9: ein Ausführungsbeispiel der Empfängerseite eines erfindungsgemäßen Systems mit Kurzschließern.

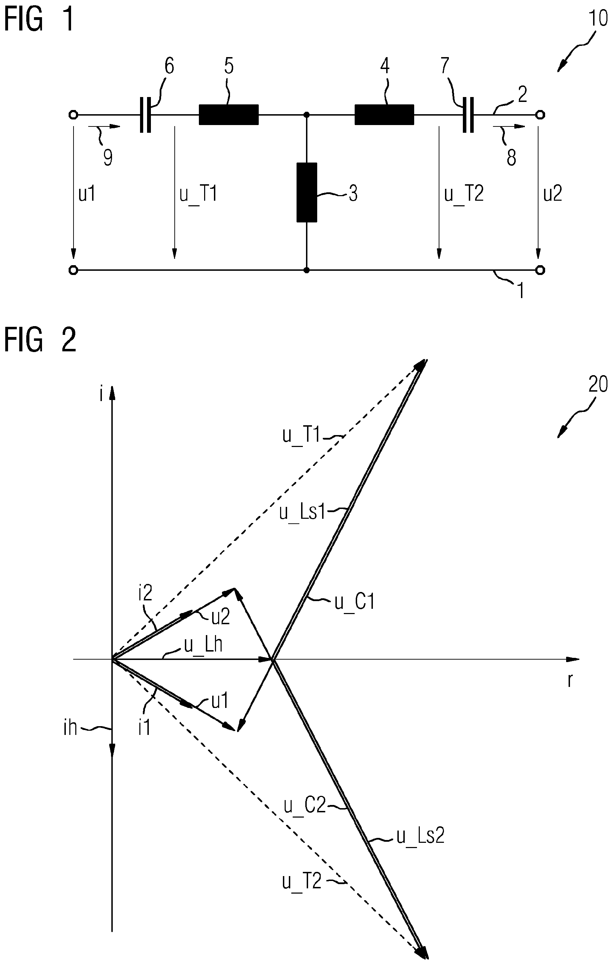

In der Figur 1 ist ein idealisiertes Ersatzschaltbild 10 (Widerstände nicht dargestellt) für ein in Reihenresonanz ausgebildetes System zum induktiven Übertragen von Energie gezeigt. Die primär- und sekundärseitigen Kompensationskondensatoren 6,7 sind in Reihe zu den Streuinduktivitäten 4,5 geschaltet und so bemessen, dass die Produkte mit den Streuinduktivitäten primär und sekundär bei der gleichen Frequenz eine Nullstelle aufweisen. Die Hauptinduktivität 3 wird nicht kompensiert. Somit ergeben sich zwischen den Leitungen 1 und 2 die Spannungen u1, u2, u_T1 und u_T2.

In Figur 2 ist ein Zeigerdiagramm 20 mit Imaginärachse i und Realachse r der Spannungen u_T1, u_T2, u_C1, u_C2, u1, u2, u_Ls1, u_Ls2 und Ströme i1,i2, ih , wie sie im Resonanzbetrieb des Systems gemäß Figur 1 auftreten, gezeigt. Dabei sind sowohl primärseitig als auch sekundärseitig Strom und Spannung in Phase, es wird Wirkleistung übertragen. Man sieht weiterhin, dass für die übertragene Leistung eine vergleichsweise kleine Spannung u1 anzulegen ist. Durch die ReihenResonanz ist auch die Magnetisierungsspannung u_Lh klein.

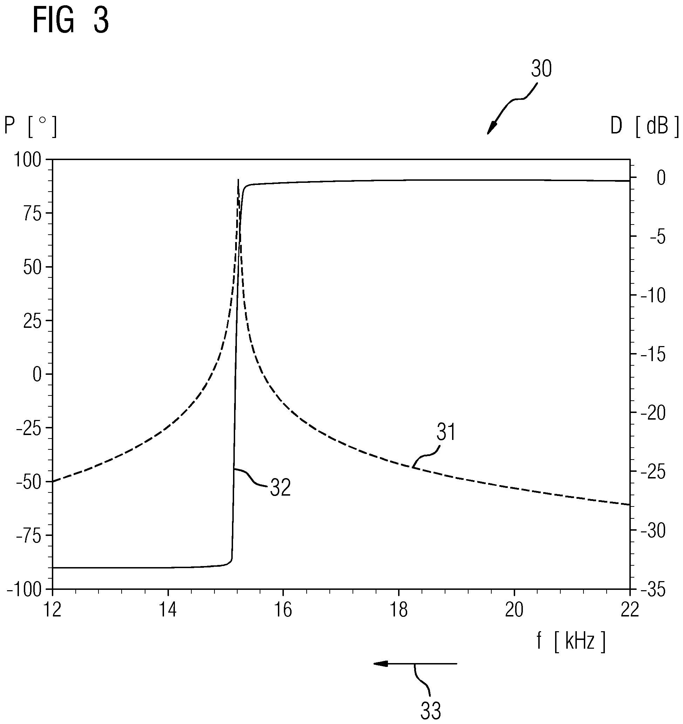

In Figur 3 ist ein Liniendiagramm 30 für den frequenzabhängigen Verlauf von Phase und Impedanz beim Betrieb eines Systems gemäß Figur 1 dargestellt. Es handelt sich um simulierte Verläufe bei passiver Last: Über der Frequenz f sind aufgetragen die Phasenlage P eines Stromes mit der Kurve 32, der sich bei gegebener Spannung (Phase=O°, Referenzphase) einstellt, und die relative Stromamplitude (Dämpfung) D in dB mit der Kurve 31. Es existiert ein Resonanzpunkt bei Phase 0°, in dem die Dämpfung (Impedanz) minimal ist. Weiter vom Resonanzpunkt entfernt (in Richtung hohe Frequenzen) erhöht sich die Dämpfung, d.h. die Stromamplitude wird kleiner, und die Phasenlage geht gegen 90°. Insbesondere bewirkt die Schaltung, dass nicht mehrere Resonanzstellen vorliegen, so dass ein stetiger Zusammenhang zwischen Frequenz und Phase entsteht. Damit kann die Phase über die Frequenz geregelt werden.

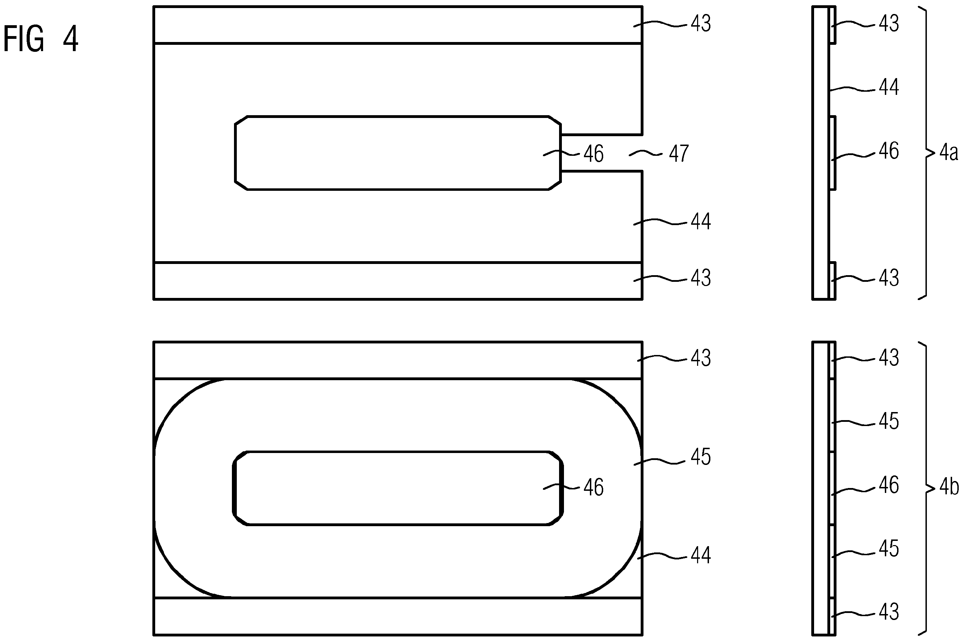

Figur 4 zeigt ein Ausführungsbeispiel eines Induktionselements mit Kernmaterial zum Führen des magnetischen Feldes (E-Kern ähnliche Anordnung), wobei in der oberen Darstellung 4a im Profil erhöhte Bereiche 43,46 eine Aussparung 44 bilden, in der in der unteren Darstellung 4b eine Litzenspule 45 vorgesehen ist. Als Kernmaterial werden Ferrite eingesetzt, die in eine Form bzw. Hülle aus Kunststoff eingefüllt werden (nicht gezeigt). Die Litzenspule ist im Betrieb in Richtung des Luftspalts bzw. des korrespondierenden Induktionselements ausgerichtet (ein weiteres Induktionselement ist in einer Ebene über der dargestellten Schnittebene anzuordnen). Das Kernmaterial ist um die Spule herum gruppiert zum Weiterführen des Magnetfeldes Richtung Luftspalt, so dass die Streufelder nach außen klein bleiben und die Feldenergie zur Übertragung genutzt werden kann. Das gezeigte Induktionselement kann sowohl primärseitig als auch sekundärseitig eingesetzt werden. Die Anordnung ist sehr "flach" und deswegen besonders zur Montage unter einem Fahrzeugboden oder auf/in einer Fahrbahn oder einem Gleisbett geeignet. Es wird durch die flache Bauweise eine große Fläche für die Erzeugung eines großen magnetischen Flusses zur Verfügung gestellt und die verfügbare Breite und Länge unter einem Fahrzeugboden optimal genutzt, ohne die Bodenfreiheit zu beeinträchtigen. Weiterhin begrenzt diese Bauweise die Masse auf sehr kleine Werte. Die aktiven Bauteile (Ferrite und Litzenleiter) werden von einer nichtmagnetischen Kunststoffhülle in Form gehalten.

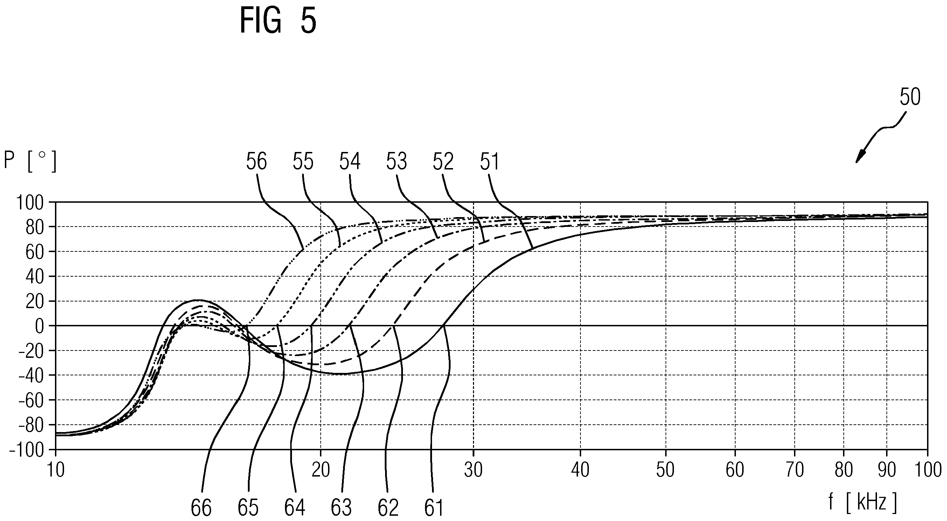

Figur 5 stellt ein Liniendiagramm 50 einer berechneten Frequenzabhängigkeit des Phasenversatzes zwischen Primärstrom und Primärspannung bei der Energieübertragung unter Berücksichtigung des Abstands zwischen den Induktionselementen dar. Dabei wurden bestimmte Parameter für Streu- und Hauptinduktivität sowie Kompensationskondensator-Kapazität festgesetzt. Auf den Achsen Frequenz f und Phase P sind Phasenverlaufskurven 51-56 simuliert, wobei jeweils von einer senderseitigen Übertragungsleistung von 400 kW ausgegangen wird. Bei den Kurven 51-56 nimmt jeweils der Abstand zwischen den Induktionselementen eines Systems zu; er beträgt für die Kurve 51 98 mm, für die Kurve 52 119 mm, für die Kurve 53 140 mm, für die Kurve 54 161 mm, für die Kurve 55 182 mm, und für die Kurve 56 203 mm. Es ergeben sich aus den Kurven 51-56 jeweils bei Phasenlage 0° optimale Leistungsfaktorwerte und damit eine effiziente Energieübertragung; dies sind die Arbeitspunkte 61-66 des Systems, denn die Energieübertragung soll Leistungsfaktoren nahe 1 aufweisen, d.h. Phasenversatz = 0°. Es ist zu erkennen, dass z.B. eine Erhöhung des Luftspaltes (bei gleicher Frequenz) dazu führt, dass die Phase zu groß wird. Die Regelungseinrichtung kann die Phase wieder auf 0° regeln, indem die Frequenz erniedrigt wird. Unter realen Bedingungen kann sich aufgrund der an das System angeschlossenen Last die Steilheit der Kurven gegenüber dem idealen Verlauf gemäß Simulation verändern, und es kann eine zweite Resonanzstelle entstehen.

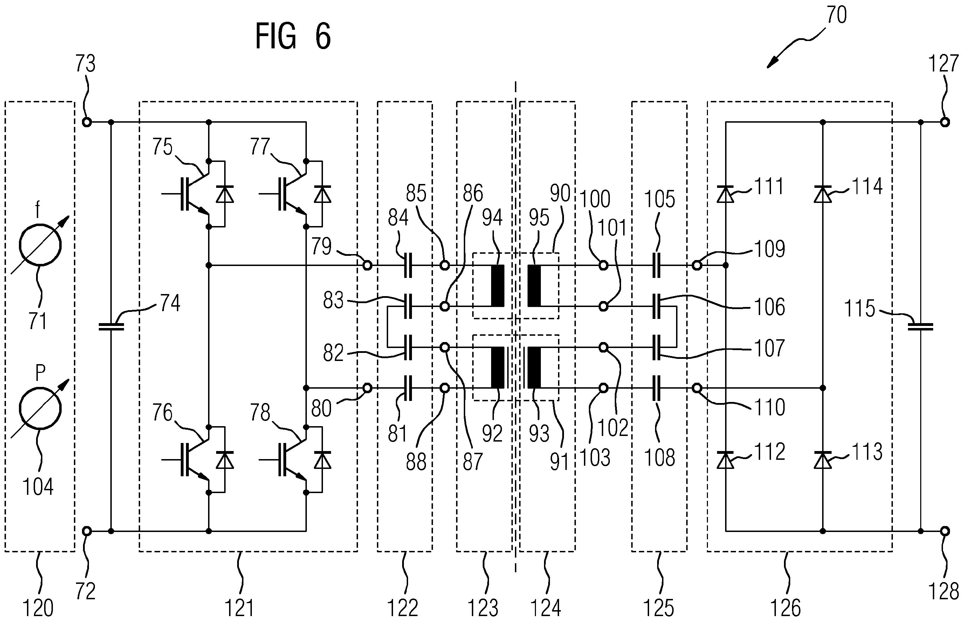

Die Figur 6 zeigt ein Ausführungsbeispiel eines erfindungsgemäßen Systems als Prinzipschaltbild mit einem Wechselrichter 121, der an eine an eine Gleichspannungsversorgung (nicht dargestellt) an den Anschlusspunkten 72,73 angeschlossen ist, zwischen die ein Zwischenkreiskondensator 74 geschaltet ist. Die Gleichspannungsversorgung kann beispielsweise ein 750 V DC-Bahnstromnetz sein. Der Wechselrichter 121 weist vier schaltbare Halbleiterelemente 75,76,77,78 auf, um eine Wechselspannung zu erzeugen. Eine Messeinrichtung 120 erfasst mittels einer Frequenzmesseinrichtung 71 die Frequenz f des Primärstroms und mittels einer Phasenmesseinrichtung die Phase P zwischen Primärstrom und Primärspannung, wobei die Primärseite definitionsgemäß der Teil des Systems ist, bei dem mittels des Wechselrichters eine Wechselspannung erzeugbar ist. Dem Primär- bzw. Sekundärteil des Systems sind Resonanzkondensatoren 81-84,105-108 in zwei Kondensatoranordnungen 122,125 vor- bzw. nachgeschaltet, so dass eine Reihenschaltung bzw. Reihenresonanz ermöglicht wird. Primärseitig ist die Kondensatoranordnung 122 über Anschlüsse 79,80 mit dem Wechselrichter 121 verbunden. Es werden mehrere Kondensatoren verwendet (im Beispiel 4 in Reihe, jeweils primär- und sekundärseitig), so dass die Spannungsbelastung pro Kondensator kleiner wird. Dazu werden mehrere Anschlüsse 85-88 aus der Kondensatoranordnung 122 herausgeführt, um auch die Spannung an den Transformatorwicklungen klein zu halten. Eine Regelungseinrichtung (nicht gezeigt) regelt anhand des gemessenen Leistungsabgabewerts die Wechselspannungsfrequenz des Wechselrichters (121,195).

Vorgesehen sind primärseitig zwei Induktionselemente 92,94, die ein Primärteil 123 bilden und die Energie auf zwei sekundärseitige Induktionselemente 93,95, die ein Sekundärteil 124 bilden, übertragen können. Die sekundärseitigen Induktionselemente 93,95 sind über Anschlüsse 100-103 mit der Kondensatoranordnung 125 verbunden, der über die Anschlüsse 109,110 ein Gleichrichter 126 nachgeschaltet ist. Der Gleichrichter 126 weist vier Dioden 111-114 auf. Die gleichgerichtete Spannung kann über die Anschlüsse 127,128 bereitgestellt werden, wobei ein Zwischenkreiskondensator 115 vorgesehen ist. Hierbei kann auch ein vorhandenes Bauteil verwendet werden, z.B. ein Zwischenkreiskondensator eines Traktionswechselrichters oder Ladestellers für einen Energiespeicher eines Fahrzeuges.

Der Gleichrichter 121 ist beispielsweise an eine nicht gezeigte Fahrzeugsammelschiene angeschlossen. Von dort aus kann die Leistung an alle Verbraucher gemäß deren Erfordernissen verteilt werden. Dazu sind z.B. Hoch- und Tiefsetzsteller für die verschiedene bekannte Energiespeicher des Standes der Technik einsetzbar, wobei auf bekannte Regelverfahren zurückgegriffen werden kann - z.B. durch Regelung der Sammelschienenspannung auf einen konstanten Wert. Somit können gleichzeitig Energiespeicher unterschiedlichen Typs oder unterschiedlicher Leistung bedient werden. Defekte Speicher werden nicht gespeist, da sie abgetrennt sind.

Alternativ ist auch eine direkte Energieeinspeisung möglich. Anstatt das Sekundärteil an die Fahrzeugsammelschiene anzuschließen, wird das Sekundärteil an die fahrzeugseitigen Energiespeicher angeschlossen. Es wird der vorher definierte Nennstrom der Energiespeicher eingeprägt. Bei Betrieb mit Übersetzung von 1: 1 wird primärseitig die Spannung so lange erhöht, bis sie der Nennspannung der Energiespeicher entspricht, dann wird der Ladevorgang beendet. Dies hat den Vorteil, dass fahrzeugseitig keine Ladesteller erforderlich sind. Somit ist ein Betrieb ohne Leistungsvorgabe (keine Datenübertragung zwischen Sekundärteil und Primärteil) möglich, wenn vorab definierte Ladeleistungen/-ströme fix definiert sind.

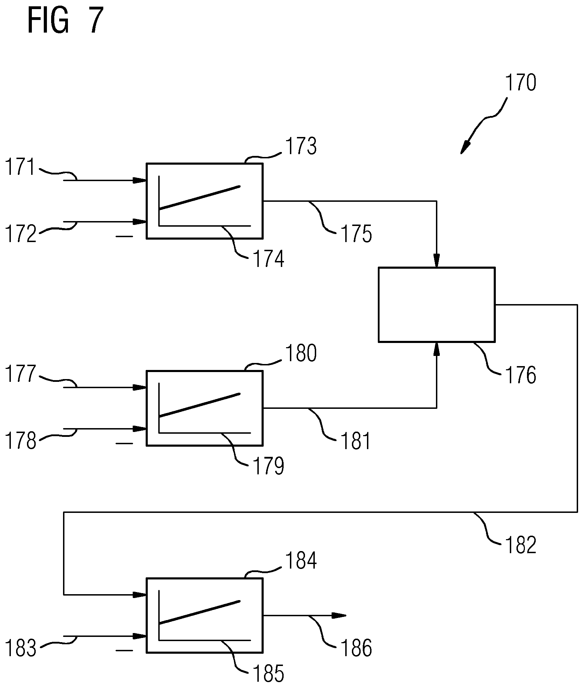

Figur 7 zeigt ein Ablaufdiagramm der erfindungsgemäßen Regelung der Wechselspannungsfrequenz, wie sie durch die Regelungseinrichtung vorgenommen werden kann. Ein Leistungsregler 173 erhält einen Sollwert 171 und einen Istwert 172 der gemessenen Leistung, um anhand eines internen Modells 174 einen Sollwert 175 für die Phasenlage des Primärstromes zu erzeugen. Solange die geforderte Leistung nicht überschritten wird, gibt der Leistungsregler beispielsweise 0° vor. Ein Strombegrenzungsregler 180 erzeugt einen Sollwert 181 für die Phasenlage des Primärstromes, wobei ein Maximalwert 177 und ein Istwert 178 für den Primärstrom vorgegeben sind und ein internes Modell 179 verwendet wird. Solange der zulässige Maximalstrom nicht überschritten wird, gibt der Strombegrenzungsregler 0° vor. Beide Phasenwerte 175,181 werden über eine Maximumbildungseinheit 176 verknüpft und als Sollphasesignal 182 an einen Frequenzregler 184 gegeben. Der Frequenzregler 184 erhält als Eingangssignal weiterhin einen Istwert für die Phase und regelt die gewünschte Phasenlage anhand eines internen Modells 185 durch Verstellen der Frequenz ein. Als Ausgabesignal 186 wird ein Frequenzausgabewert 186 ausgeben.

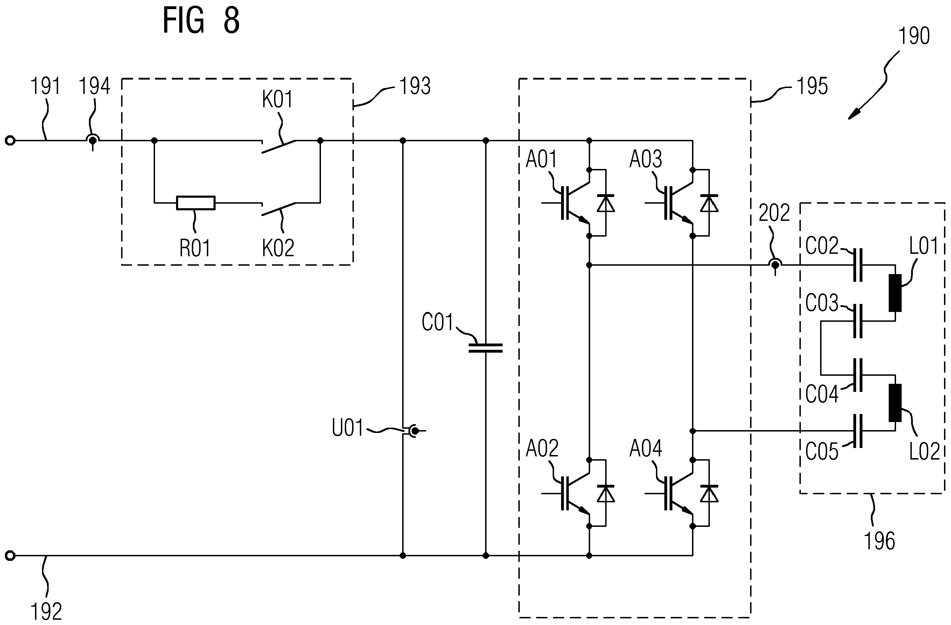

Figur 8 zeigt ein Ausführungsbeispiel 190 der erfindungsgemäßen Anordnung mit einer Abschalt- 195 und einer Vorladeeinrichtung 193. Dabei sind primärseitig die Leitungen 191 und 192 mit einem Zwischenkreiskondensator C01 verbunden, der über die Vorladeeinrichtung 193, bestehend aus Widerstand R01 und Schaltern K01, K02 , auf seine Betriebsspannung vorgeladen werden kann. Der Wechselrichter 195 weist vier schaltbare Elemente A01-A04 auf, die geeignet sind, im Fehlerfall die nachgeschalteten Elemente 196 stromfrei zu schalten. Die nachgeschalteten Elemente 196 umfassen das Primärteil mit den Induktionselementen L01, L02 sowie die Kondensatoranordnung mit den Kondensatoren C02-C05. Am Kontaktpunkt 194 ist ein Anschlusspunkt für eine nicht gezeigte Netzstrommesseinrichtung (Messeinrichtungen jeweils nicht dargestellt) vorgesehen, während am Kontaktpunkt U01 eine Spannungsmesseinrichtung vorgesehen ist. Am Kontaktpunkt 202 ist eine Strommesseinrichtung dem Wechselrichter nachgeschaltet. Eine Messeinrichtung für das Messen eines Leistungsabgabewertes sowie eine Regelungseinrichtung für das Regeln der Wechselspannungsfrequenz des Wechselrichters 195 anhand des gemessenen Leistungsabgabewerts sind nicht dargestellt.

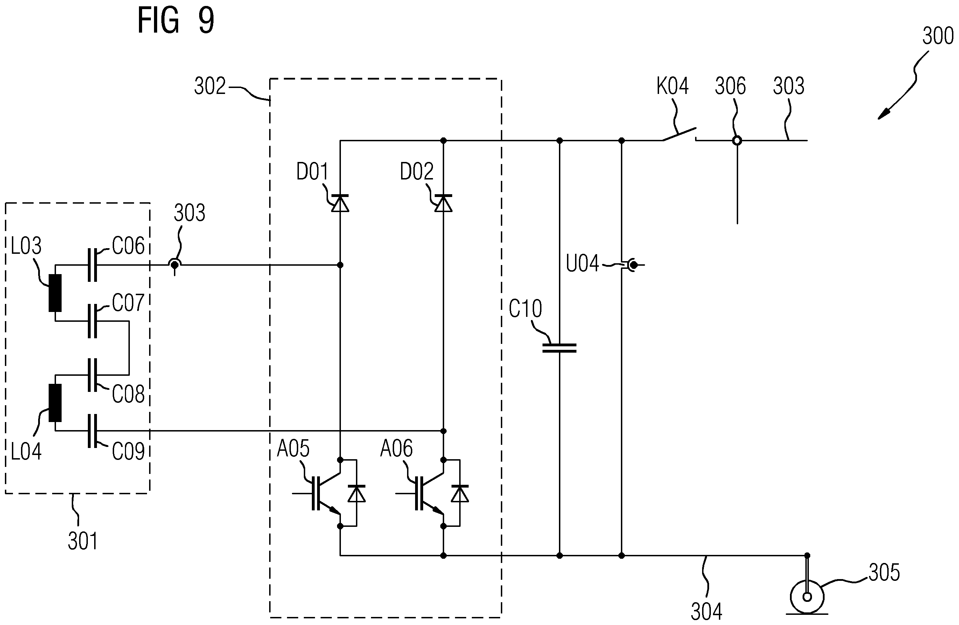

Figur 9 zeigt ein Ausführungsbeispiel 300 der Empfängerseite eines erfindungsgemäßen Systems mit Kurzschließern A05, A06. Sekundärseitig ist der Baueinheit 301 aus Induktionselementen L03,L04 und Kondensatoren C06-C09 ein Gleichrichter 302 mit zwei Dioden D01, D02 und zwei schaltbaren Elementen A05,A06 , die als Kurzschließer eingesetzt werden können, nachgeschaltet. Zwischen dem Kondensator C06 und dem Gleichrichter 302 ist am Kontaktpunkt 303 eine Strommesseinrichtung (nicht dargestellt) angeschlossen. Weiterhin umfasst die Schaltung einen Stützkreiskondensator C10 sowie einen Kontaktpunkt U04 für den Anschluss einer Spannungsmesseinrichtung; es ist auch ein Trennschalter K04 vorgesehen. Am Kontaktpunkt 306 können Steller angeschlossen werden, ggf. mit einer Netzdrossel und einer Vorladeeinrichtung für den Stützkondensator (jeweils nicht gezeigt).

Um auf eine Datenübertragung zwischen dem Primärteil und dem Sekundärteil zu verzichten, kann ein Zweipunkt-Regelprinzip verwendet werden: Sekundärseitig wird der Transformator bzw. das Induktionselement kurzgeschlossen, wenn die übertragene Leistung zu groß wird. Das System reagiert mit einer Rücknahme der übertragenen Leistung gegen 0. Wird wieder Leistung benötigt, dann wird der Kurzschluss wieder zurückgenommen. Dies bedeutet, dass keine kontinuierliche Energieübertragung erfolgt, sondern Leistungspulse abgegeben werden.

Sollten sekundärseitig unzulässig hohe Spannungen auftreten, so kann sich die Anlage schützen, indem die Dioden des Gleichrichters 302, die parallel zu den Schaltern A05 und A06 liegen, überbrückt werden. In vorteilhafter Weise geschieht dies, indem die schaltbaren Elemente A05, A06 bei Überspannung gezündet werden. Dadurch bricht die Spannung ein. Primärseitig macht sich dies durch eine plötzliche Veränderung des Resonanzpunktes und damit der Phase bemerkbar. Die Regelungseinrichtung kann über die oben beschriebene Strombegrenzung diesen Fall beherrschen, so dass auch keine unzulässigen Ströme auftreten. Die primärseitige Kombination von Strom-und Leistungsregler ermöglicht es, auch bei veränderlichen Spannungen beide Größen innerhalb zulässiger Grenzwerte zu halten. In einer Weiterbildung des in Figur 9 gezeigten Ausführungsbeispiels werden alle Dioden des Gleichrichters 103 durch aktive Schalter mit antiparallelen Dioden ersetzt (nicht gezeigt); damit kann prinzipiell die Energieübertragung in beide Richtungen erfolgen, z.B. stationär ins sekundärseitige Fahrzeug oder vom Fahrzeug nach stationär.

## Patentansprüche

1. Anordnung (190) zum induktiven Übertragen von Energie für das Laden eines Energiespeichers eines Schienenfahrzeugs, umfassend mindestens ein erstes Induktionselement (92,94,L01,L02), das dafür geeignet ist, drahtlos Energie an mindestens ein zweites Induktionselement (93,95,L03,L04) zu übertragen, und
einen Wechselrichter (121,195), dessen Wechselspannungsfrequenz regelbar ist, wobei der Wechselrichter (121,195) geeignet ist, eine Wechselspannung mit der Wechselspannungsfrequenz an das mindestens eine erste Induktionselement (92,94,L01,L02) bereit zu stellen, und
eine Regelungseinrichtung, die dafür geeignet ist, die Wechselspannungsfrequenz des Wechselrichters (121,195) zu regeln, und
eine Messeinrichtung (120), die dafür geeignet ist, einen Messwert bei einer drahtlosen Energieübertragung vom mindestens einen ersten (92,94,L01,L02) zum mindestens einen zweiten Induktionselement (93,95,L03,L04) zu ermitteln und an die Regelungseinrichtung zu übermitteln,
**dadurch gekennzeichnet, dass**
die Messeinrichtung (120) geeignet ist, als Messwert einen Leistungsabgabewert zu messen, und dass
die Regelungseinrichtung geeignet ist, die Wechselspannungsfrequenz des Wechselrichters (121,195) von einem oberen Grenzwert herunter zu regeln, bis sich ein vorher festgelegter Leistungsabgabewert bei der Energieübertragung einstellt, und dass die Regelungseinrichtung geeignet ist, bei zu hohen Strömen die Ströme durch eine Erhöhung der Wechselspannungsfrequenz mittels sofortiger Einstellung vergleichsweise großer Frequenzen zu begrenzen, und dass
das erste Induktionselement einem Gleis für den Schienenverkehr zugeordnet ist.

2. Anordnung (190) nach Anspruch 1, **dadurch gekennzeichnet, dass** der obere Grenzwert zwischen 15 kHz und 20 kHz liegt.

3. Anordnung (190) nach Anspruch 1 oder 2, **dadurch gekennzeichnet, dass** die Messeinrichtung (120) und die Regelungseinrichtung dafür geeignet sind, als Leistungsabgabewert den Leistungsfaktor zu verwenden.

4. Anordnung (190) nach Anspruch 3, **dadurch gekennzeichnet, dass** die Messeinrichtung (120) dafür ausgebildet ist, den Leistungsfaktor mittels des Phasenunterschieds zwischen Spannung und Strom zu bestimmen.

5. Anordnung (190) nach Anspruch 3 oder 4, **dadurch gekennzeichnet, dass** die Regelungseinrichtung dafür eingerichtet ist, als Standard bei der Energieübertragung einen Leistungsfaktor von 1 einzustellen.

6. Anordnung (190) nach einem der Ansprüche 3 bis 5, **dadurch gekennzeichnet, dass** eine Kommunikationseinrichtung vorgesehen ist, die geeignet ist, Signale über die zu übermittelnde Leistung und/oder einen aktuellen einzustellenden Leistungsfaktor zu empfangen und an die Regelungseinrichtung zu übermitteln.

7. Anordnung (190) nach Anspruch 6, **dadurch gekennzeichnet, dass** die Regelungseinrichtung dafür eingerichtet ist, anhand der Signale durch eine Erhöhung der Wechselspannungsfrequenz einen Leistungsfaktor kleiner 1 einzustellen.

8. Anordnung (190) nach einem der vorhergehenden Ansprüche, **dadurch gekennzeichnet, dass** die Messeinrichtung (120) dem mindestens einen ersten Induktionselement (92,94,L01,L02) zugeordnet ist.

9. Anordnung (190) nach einem der vorhergehenden Ansprüche, **dadurch gekennzeichnet, dass** die Regelungseinrichtung geeignet ist, die Wechselspannungsfrequenz innerhalb einer Zeitdauer von wenigen Wechselspannungsperioden, bevorzugt weniger als zwei Wechselspannungsperioden, zu regeln und den vorher festgelegten Leistungsabgabewert einzustellen.

10. Anordnung (190) nach einem der vorhergehenden Ansprüche, **dadurch gekennzeichnet, dass** mindestens ein erster Kompensationskondensator (81,82,83,84,C02,C03,C04,C05) für das Kompensieren einer ersten Streuinduktivität vorgesehen ist, wobei der mindestens eine erste Kompensationskondensator (81,82,83,84,C02,C03,C04,C05) in Reihe mit dem mindestens einen ersten Induktionselement (92,94,L01,L02) geschaltet ist.

11. Anordnung (190) nach einem der vorhergehenden Ansprüche, **dadurch gekennzeichnet, dass** eine Vorladeeinrichtung (193) für das Vorladen eines Zwischenkreiskondensators (C01) vorhanden ist.

12. System (70) zum induktiven Übertragen von Energie für das Laden eines Energiespeichers eines Schienenfahrzeugs, umfassend
eine Anordnung nach einem der vorhergehenden Ansprüche und mindestens ein zweites Induktionselement (93,95,L03,L04), das in einem Abstand zu dem mindestens einen ersten Induktionselement (92,94,L01,L02) angeordnet ist, wobei das zweite Induktionselement dem Schienenfahrzeug zugeordnet ist, und einen Gleichrichter (126,302) für das Bereitstellen von Gleichspannung an den Energiespeicher,
wobei mindestens ein zweiter Kompensationskondensator (105,106,107,108,C06,C07,C08,C09) für das Kompensieren einer zweiten Streuinduktivität vorgesehen ist, wobei der mindestens eine zweite Kompensationskondensator (105,106,107,108,C06,C07,C08,C09) in Reihe mit dem mindestens einen zweiten Induktionselement (93,95,L03,L04) geschaltet ist.

13. System nach Anspruch 12, **dadurch gekennzeichnet, dass** das mindestens eine zweite Induktionselement (93,95,L03,L04) im Wesentlichen koplanar zu dem mindestens einen ersten Induktionselement (92,94,L01,L02) angeordnet ist.

14. System nach Anspruch 12 oder 13, **dadurch gekennzeichnet, dass** die Induktionselemente (92,94,L01,L02,93,95,L03,L04) gleich groß sind.

15. System nach Anspruch 12 oder 13, **dadurch gekennzeichnet, dass** eines der beiden mindestens einen Induktionselemente (92,94,L01,L02,93,95,L03,L04) derart größer als das andere mindestens eine Induktionselement (92,94,L01,L02,93,95,L03,L04) ausgebildet ist, dass Ungenauigkeiten beim Positionieren der Induktionselemente (92,94,L01,L02,93,95,L03,L04) zueinander kompensierbar sind und eine volle Überdeckung des kleineren durch das größere Induktionselement (92,94,L01,L02,93,95,L03,L04) sicher gestellt ist.

16. System nach einem der Ansprüche 12 bis 15, **dadurch gekennzeichnet, dass** die Induktionselemente (92,94,L01,L02,93,95,L03,L04) metallisches Kernmaterial (46) zur Führung des magnetischen Feldes aufweisen.

17. System nach Anspruch 16, **dadurch gekennzeichnet, dass** die Induktionselemente (92,94,L01,L02,93,95,L03,L04) jeweils mindestens eine das Kernmaterial umschließende Spule (45) aus Litzeleitern aufweisen.

18. System nach einem der Ansprüche 12 bis 17, **dadurch gekennzeichnet, dass** die Regelungseinrichtung geeignet ist, während der Energieübertragung ständig die Wechselspannungsfrequenz zu regeln, um Veränderungen des Abstands zwischen den Induktionselementen (92,94,L01,L02,93,95,L03,L04) auszugleichen.

19. System nach einem der Ansprüche 12 bis 18, **dadurch gekennzeichnet, dass** der Abstand zwischen 70 mm und 300 mm, bevorzugt zwischen 80 mm und 250 mm, noch mehr bevorzugt zwischen 90 mm und 220 mm beträgt.

20. System nach einem der Ansprüche 12 bis 19, **dadurch gekennzeichnet, dass** dem mindestens einen ersten (92,94,L01,L02) und dem mindestens einen zweiten Induktionselement (93,95,L03,L04) jeweils mehrere Kompensationskondensatoren (81,82,83,84,105,106,107,108,C02,C03,C04,C05,C06,C07,C08,C09) zugeordnet werden, um die an einem einzelnen Kompensationskondensator (81,82,83,84,105,106,107,108,C02,C03,C04,C05,C06,C07,C08,C09) anliegende Spannung zu begrenzen.

21. System nach einem der Ansprüche 12 bis 20, **dadurch gekennzeichnet, dass** eine Mehrzahl von ersten Induktionselementen (92,94,L01,L02) und eine Mehrzahl von zweiten Induktionselementen (93,95,L03,L04) vorgesehen ist.

22. System nach einem der Ansprüche 12 bis 21, **dadurch gekennzeichnet, dass** der Gleichrichter (126,302) schaltbare Halbleiterelemente (A05,A06) umfasst, die dafür geeignet sind, durch Auslösen eines Kurzschlusses die an dem mindestens einen zweiten Induktionselement (L03,L04) anliegende Spannung zu begrenzen.

23. Verfahren zum induktiven Übertragen von Energie für das Laden mindestens eines Energiespeichers eines Schienenfahrzeugs, umfassend folgende Verfahrensschritte:
- Bereitstellen einer Wechselspannung mit einer Wechselspannungsfrequenz mittels eines Wechselrichters (121,195) an mindestens ein erstes Induktionselement (92,94,L01,L02), wobei das erste Induktionselement einem Gleis für den Schienenverkehr zugeordnet ist; und
- regeln der Wechselspannungsfrequenz mittels einer Regelungseinrichtung, wobei die Regelungseinrichtung geeignet ist, bei zu hohen Strömen die Ströme durch eine Erhöhung der Wechselspannungsfrequenz mittels sofortiger Einstellung vergleichsweise großer Frequenzen zu begrenzen; und
- drahtloses Übertragen von Energie von mindestens einem ersten Induktionselement (92,94,L01,L02) an mindestens ein zweites Induktionselement (93,95,L03,L04), wobei das zweite Induktionselement dem Schienenfahrzeug zugeordnet ist; und
- Messen eines Leistungsabgabewerts bei einer drahtlosen Energieübertragung zwischen den Induktionselementen mittels einer Messeinrichtung (120); und
- Übermitteln des gemessenen Leistungsabgabewerts an die Regelungseinrichtung; und
- Gleichrichten der am mindestens zweiten Induktionselement anliegenden Wechselspannung mittels eines Gleichrichters (126,302); und
- Laden des Energiespeichers des Fahrzeugs mit der gleichgerichteten Spannung,
wobei die Wechselspannungsfrequenz von einem oberen Grenzwert herunter geregelt wird, bis sich ein vorher festgelegter Leistungsabgabewert bei der Energieübertragung einstellt.

24. Verfahren nach Anspruch 23, **dadurch gekennzeichnet, dass** Streuinduktivitäten mittels jeweils mindestens einem dem jeweiligen Induktionselement (92,93,94,95,L01,L02,L03,L04) in Reihe geschalteten Kompensationskondensator (81,82,83,84,105,106,107,108,C02,C03,C04,C05,C06,C07,C08,C09) kompensiert werden.

25. Verfahren nach Anspruch 23 oder 24, **dadurch gekennzeichnet, dass** als Leistungsabgabewert der Leistungsfaktor im Stromkreis des mindestens einen ersten Induktionselements (92,94,L01,L02) gemessen wird.

## Claims

1. Arrangement (190) for inductive energy transmission for charging an energy store of a rail vehicle comprising at least one first induction element (92, 94, L01, L02) which is suitable for wirelessly transmitting energy to at least one second induction element (93, 95, L03, L04) and
an inverter (121,195) the AC voltage frequency of which can be controlled, wherein the inverter (121,195) is suitable for providing an AC voltage with the AC voltage frequency to the at least one first induction element (92, 94, L01, L02) and
a controller, which is suitable for controlling the AC voltage frequency of the inverter (121,195), and
a measuring device (120), which is suitable for ascertaining a measurement value when wirelessly transmitting energy from the at least one first (92, 94, L01, L02) to the at least one second induction element (93, 95, L03, L04) and transmitting said measurement value to the controller,
**characterised in that**
the measuring device (120) is suitable for measuring a power output value as the measurement value, and that
the controller is suitable for adjusting down the AC voltage frequency of the inverter (121,195) from an upper threshold until a previously specified power output value is set while energy is being transmitted and that the controller is suitable, in the case of excessively high currents, for limiting the currents by increasing the AC voltage frequency by means of immediately setting comparatively high frequencies, and that
the first induction element is paired with a track for the rail traffic.

2. Arrangement (190) according to claim 1, **characterised in that** the upper threshold is between 15 kHz and 20 kHz.

3. Arrangement (190) according to claim 1 or 2, **characterised in that** the measuring device (120) and the controller are suitable for using the power factor as the power output value.

4. Arrangement (190) according to claim 3, **characterised in that** the measuring device (120) is embodied to determine the power factor by means of the phase difference between voltage and current.

5. Arrangement (190) according to claim 3 or 4, **characterised in that** the controller is configured to set a power factor of 1 as standard during the energy transmission.

6. Arrangement (190) according to one of claims 3 to 5, **characterised in that** a communication device is provided, which is suitable for receiving signals about the power to be transmitted and/or a power factor that is currently to be set and for transmitting them to the controller.

7. Arrangement (190) according to claim 6, **characterised in that** the controller is configured to set a power factor of less than 1 using the signals by increasing the AC voltage frequency.

8. Arrangement (190) according to one of the preceding claims, **characterised in that** the measuring device (120) is paired with the at least one first induction element (92, 94, L01, L02) .

9. Arrangement (190) according to one of the preceding claims, **characterised in that** the controller is suitable for controlling the AC voltage frequency within a period of a few AC voltage periods, preferably fewer than two AC voltage periods, and to set the previously specified power output value.

10. Arrangement (190) according to one of the preceding claims, **characterised in that** at least one first compensation capacitor (81, 82, 83, 84, C02, C03, C04, C05) is provided for the compensation of a first leakage inductance, wherein the at least one first compensation capacitor (81, 82, 83, 84, C02, C03, C04, C05) is connected in series to the at least one first induction element (92, 94, L01, L02).

11. Arrangement (190) according to one of the preceding claims, **characterised in that** a precharging device (193) is provided for precharging an intermediate circuit capacitor (C01) .

12. System (70) for inductive energy transmission for charging an energy store of a rail vehicle comprising
an arrangement according to any one of the preceding claims and at least one second induction element (93, 95, L03, L04), which is arranged at a distance from the at least one first induction element (92, 94, L01, L02), wherein the second induction element is paired with the rail vehicle and
a rectifier (126,302) for the provision of direct voltage to the energy store,
wherein at least one second compensation capacitor (105, 106, 107, 108, C06, C07, C08, C09) is provided for the compensation of second leakage inductance, wherein the at least one second compensation capacitor (105, 106, 107, 108, C06, C07, C08, C09) is connected in series to the at least one second induction element (93, 95, L03, L04).

13. System according to claim 12, **characterised in that** the at least one second induction element (93, 95, L03, L04) is arranged substantially coplanar with the at least one first induction element (92, 94, L01, L02).

14. System according to claim 12 or 13, **characterised in that** the induction elements (92, 94, L01, L02, 93, 95, L03, L04) are of the same size.

15. System according to claim 12 or 13, **characterised in that** one of the two at least one induction elements (92, 94,L01,L02, 93, 95,L03,L04) is embodied larger than the other at least one induction element (92, 94,L01,L02, 93, 95,L03,L04) such that inaccuracies in the positioning of the induction elements (92, 94,L01,L02, 93, 95,L03,L04) can be mutually compensated and complete coverage of the smaller induction element by the larger induction element (92, 94, L01, L02, 93, 95, L03, L04) is ensured.

16. System according to one of claims 12 to 15, **characterised in that** the induction elements (92, 94, L01, L02, 93, 95, L03, L04) have a metallic core material (46) for guiding the magnetic field.

17. System according to claim 16, **characterised in that** the induction elements (92, 94, L01, L02, 93, 95, L03, L04) in each case comprise at least one core (45) made of stranded conductors enclosing the core material.

18. System according to one of claims 12 to 17, **characterised in that** the controller is suitable for controlling the AC voltage frequency constantly during the energy transmission in order to compensate changes in the distance between the induction elements (92, 94, L01, L02, 93, 95, L03, L04).

19. System according to one of claims 12 to 18, **characterised in that** the distance is between 70 mm and 300 mm, preferably between 80 mm and 250 mm, still more preferably between 90 mm and 220 mm.

20. System according to one of claims 12 to 19, **characterised in that** in each case a plurality of compensation capacitors (81, 82, 83, 84, 105, 106, 107, 108, C02, C03, C04, C05, C06, C07, C08, C09) are paired with the at least one first (92, 94, L01, L02) and the at least one second induction element (93, 95, L03, L04) in order to limit the voltage applied to an individual compensation capacitor (81, 82, 83, 84, 105, 106, 107, 108, C02, C03, C04, C05, C06, C07, C08, C09).

21. System according to one of claims 12 to 20, **characterised in that** a plurality of first induction elements (92, 94, L01, L02) and a plurality of second induction elements (93, 95, L03, L04) are provided.

22. System according to one of claims 12 to 21, **characterised in that** the rectifier (126, 302) comprises switchable semiconductor elements (A05, A06), which are suitable for limiting the voltage applied to the at least one second induction element (L03, L04) by triggering a short circuit.

23. Method for inductive energy transmission for charging at least one energy store of a rail vehicle comprising the following method steps:
- provision of an AC voltage with an AC voltage frequency by means of an inverter (121, 195) to at least one first induction element (92, 94, L01, L02), wherein the first induction element is paired with a track for the rail traffic; and
- controlling the AC voltage frequency by means of a controller, wherein the controller is suitable, in the case of excessively high currents, for limiting the currents by increasing the AC voltage frequency by means of immediately setting comparatively high frequencies; and
- wireless transmission of energy from at least one first induction element (92, 94, L01, L02) to at least one second induction element (93, 95, L03, L04), wherein the second induction element is paired with the rail vehicle; and
- measuring a power output value during the wireless transmission of energy between the induction elements by means of a measuring device (120); and
- transmission of the measured power output value to the controller; and
- rectification of the AC voltage applied to the at least second induction element by means of a rectifier (126, 302); and
- charging the energy store of the vehicle with the rectified voltage,
wherein the AC voltage frequency is adjusted down from an upper threshold until a previously specified power output value is set during the energy transmission.

24. Method according to claim 23, **characterised in that** leakage inductances are compensated by means of in each case at least one compensation capacitor (81, 82, 83, 84, 105, 106, 107, 108, C02, C03, C04, C05, C06, C07, C08, C09) connected in series to the respective induction element (92, 93, 94, 95, L01, L02, L03, L04).

25. Method according to claim 23 or 24, **characterised in that** the power factor in the electric circuit of the at least one first induction element (92, 94,L01,L02) is measured as the power output value.

## Revendications

1. Agencement (190) de transmission inductive d'énergie pour la charge d'un accumulateur d'énergie d'un véhicule ferroviaire, comprenant au moins un premier élément (92, 94, L01, L02) d'induction, qui est propre à transmettre sans fil de l'énergie à au moins un deuxième élément (93, 95, L03, L04) d'induction, et
un onduleur (121, 195), dont la fréquence de la tension alternative est réglable, dans lequel l'onduleur (121, 195) est propre à mettre une tension alternative ayant la fréquence de la tension alternative à disposition du au moins un premier élément (92, 94, L01, L02) d'induction et
un dispositif de régulation, qui est propre à réguler la fréquence de la tension alternative de l'onduleur (121, 195) et
un dispositif (120) de mesure, qui est propre à déterminer une valeur de mesure lors d'une transmission d'énergie sans fil d'au moins un premier (92, 94, L01, L02) à au moins un deuxième élément (93, 95, L03, L04) d'induction et à la transmettre au dispositif de régulation,
**caractérisé en ce que**
le dispositif (120) de mesure est propre à mesurer comme valeur de mesure une valeur de cession de puissance et **en ce que** le dispositif de régulation est propre à réguler la fréquence de la tension alternative de l'onduleur (121, 195) d'une valeur limite supérieure, vers le bas jusqu'à ce que s'établisse à la transmission d'énergie une valeur de cession de puissance fixée à l'avance, et **en ce que** le dispositif de régulation est propre, pour des courants trop intenses à limiter les courants par une élévation de la fréquence de la tension alternative au moyen d'un réglage immédiat de fréquences comparativement hautes et **en ce que**
le premier élément d'induction est associé à une voie ferrée du trafic ferroviaire.

2. Agencement (190) suivant la revendication 1, **caractérisé en ce que** la valeur limite supérieure est comprise entre 15 kHz et 20 kHz.

3. Agencement (190) suivant la revendication 1 ou 2, **caractérisé en ce que** le dispositif (120) de mesure et le dispositif de régulation sont propres à utiliser le facteur de puissance comme valeur de cession de puissance.

4. Agencement (190) suivant la revendication 3, **caractérisé en ce que** le dispositif (120) de mesure est constitué pour déterminer le facteur de puissance au moyen de la différence de phase entre tension et courant.

5. Agencement (190) suivant la revendication 3 ou 4, **caractérisé en ce que** le dispositif de régularisation est propre à régler un facteur de puissance de 1 comme norme à la transmission d'énergie.

6. Agencement (190) suivant l'une des revendications 3 à 5, **caractérisé en ce qu'**il est prévu un dispositif de communication, qui est propre à recevoir des signaux sur la puissance à transmettre et/ou un facteur de puissance en cours s'établissant et à les transmettre au dispositif de régulation.

7. Agencement (190) suivant la revendication 6, **caractérisé en ce que** le dispositif de régulation est agencé pour établir un facteur de puissance plus petit que 1 à l'aide des signaux par une élévation de la fréquence de la tension alternative.

8. Agencement (190) suivant l'une des revendications précédentes, **caractérisé en ce que** le dispositif (120) de mesure est associé au au moins un premier élément (92, 94, L01, L02) d'induction.

9. Agencement (190) suivant l'une des revendications précédentes, **caractérisé en ce que** le dispositif de régulation est propre à réguler la fréquence de la tension alternative dans une durée de quelques périodes de la tension alternative, de préférence de moins de deux périodes de la tension alternative, et à établir la valeur de cession de puissance fixée à l'avance.

10. Agencement (190) suivant l'une des revendications précédentes, **caractérisé en ce qu'**il est prévu au moins un premier condensateur (81, 82, 83, 84, C02, C03, C04, C05) de compensation pour la compensation d'une première inductance de fuite dans lequel le au moins un premier condensateur (81, 82, 83, 84, C02, C03, C04, C05) de compensation est monté en série avec le au moins un premier élément (92, 94, L01, L02) d'induction.

11. Agencement (190) suivant l'une des revendications précédentes, **caractérisé en ce qu'**il y a un dispositif (193) de précharge pour précharger un condensateur (C01) de circuit intermédiaire.

12. Système (70) de transmission inductive d'énergie pour la charge d'un accumulateur d'énergie d'un véhicule ferroviaire comprenant
un agencement suivant l'une des revendications précédentes et au moins un deuxième élément (93, 95, L03, L04) d'induction, qui est disposé à distance du au moins un premier élément (92, 94, L01, L02) d'induction, dans lequel le deuxième élément d'induction est affecté au véhicule ferroviaire, et un redresseur (126, 302) de mise de tension continue à disposition de l'accumulateur d'énergie,
dans lequel il est prévu au moins un deuxième condensateur (105, 106, 107, 108, C06, C07, C08, C09) de compensation pour compenser une deuxième inductance de fuite, dans lequel le au moins un deuxième condensateur (105, 106, 107, 108, C06, C07, C08, C09) de compensation est monté en série avec le au moins un deuxième élément (93, 95, L03, L04) d'induction.

13. Système suivant la revendication 12, **caractérisé en ce que** le au moins un deuxième élément (93, 95, L03, L04) d'induction est disposé de manière sensiblement coplanaire par rapport au au moins un premier élément (92, 94, L01, L02) d'induction.

14. Système suivant la revendication 12 ou 13, **caractérisé en ce que** les éléments (92, 94, L01, L02, 93, 95, L03, L04) d'induction sont de même grandeur.

15. Système suivant la revendication 12 ou 13, **caractérisé en ce que** l'un des deux au moins un élément (92, 94, L01, L02, 93, 95, L03, L04) d'induction est plus grand que l'autre au moins un élément (92, 94, L01, L02, 93, 95, L03, L04) d'induction, **en ce que** des imprécisions, à la mise en position des éléments (92, 94, L01, L02, 93, 95, L03, L04) d'induction l'un par rapport à l'autre, peuvent être compensées et un recouvrement complet du plus petit par le plus grand élément (92, 94, L01, L02, 93, 95, L03, L04) d'induction est établi de manière sure.

16. Système suivant l'une des revendications 12 à 15, **caractérisé en ce que** les éléments (92, 94, L01, L02, 93, 95, L03, L04) d'induction ont du matériau (46) de noyau métallique pour faire passer le champ magnétique.

17. Système suivant la revendication 16, **caractérisé en ce que** les éléments (92, 94, L01, L02, 93, 95, L03, L04) d'induction ont chacun au moins une bobine (45) de conducteurs à torons entourant le matériau de noyau.

18. Système suivant l'une des revendications 12 à 17, **caractérisé en ce que** le dispositif de régulation est propre à réguler pendant la transmission d'énergie constamment la fréquence de la tension alternative pour compenser des variations de la distance entre les éléments (92, 94, L01, L02, 93, 95, L03, L04) d'induction.

19. Système suivant l'une des revendications 12 à 18, **caractérisé en ce que** la distance est comprise entre 70 mm et 300 mm, en étant comprise de préférence entre 80 mm et 250 mm, et en étant comprise d'une manière encore plus préférée entre 90 mm et 220 mm.

20. Système suivant l'une des revendications 12 à 19, **caractérisé en ce que** respectivement plusieurs condensateurs (81, 82, 83, 84, 105, 106, 107, 108, C02, C03, C04, C05, C06, C07, C08, C09) sont affectés au au moins un premier (92, 94, L01, L02) et au au moins au deuxième élément (93, 95, L03, L04) d'induction pour limiter la tension s'appliquant à un condensateur (81, 82, 83, 84, 105, 106, 107, 108, C02, C03, C04, C05, C06, C07, C08, C09) individuel de compensation.

21. Système suivant l'une des revendications 12 à 20, **caractérisé en ce qu'**il est prévu une pluralité de premiers éléments (92, 94, L01, L02) d'induction et une pluralité de deuxièmes éléments (93, 95, L03, L04) d'induction.

22. Système suivant l'une des revendications 12 à 21, **caractérisé en ce que** le redresseur (126, 302) comprend des éléments (A05, A06) à semi-conducteur pouvant être commutés, qui sont propres à limiter par déclenchement d'un court-circuit la tension s'appliquant au au moins un deuxième élément (L03, L04) d'induction.

23. Procédé de transmission par induction d'énergie pour la charge d'au moins un accumulateur d'énergie d'un véhicule ferroviaire, comprenant les stades de procédé suivants :
- mise d'une tension alternative ayant une fréquence de tension alternative à disposition d'au moins un premier élément (92, 94, L01, L02) d'induction au moyen d'un onduleur (121, 195), dans lequel le premier élément d'induction est affecté à une voie ferrée pour le trafic ferroviaire ; et
- régulation de la fréquence de la tension alternative au moyen d'un dispositif de régulation, dans lequel le dispositif de régulation est propre à limiter, pour des courants trop intenses, les courants, par une élévation de la fréquence de la tension alternative au moyen d'un réglage immédiat de fréquences comparativement hautes, et
- transmission sans fil d'énergie d'au moins un premier élément (92, 94, L01, L02) d'induction à au moins un deuxième élément 93, 95, L03, L04) d'induction, dans lequel le deuxième élément d'induction est affecté au véhicule ferroviaire ; et
- mesure d'une valeur de cession de puissance lors d'une transmission d'énergie sans fil entre les éléments d'induction au moyen d'un dispositif (120) de mesure ; et
- transmission au dispositif de régulation de la valeur de cession de puissance qui a été mesurée ; et
- redressement de la tension alternative s'appliquant au moins deuxième élément d'induction au moyen d'un redresseur (126, 302) ; et
- charge de l'accumulateur d'énergie du véhicule par la tension redressée,
dans lequel on régule la fréquence de la tension alternative d'une valeur limite supérieure, vers le bas jusqu'à ce que s'établisse à la transmission d'énergie une valeur de cession de puissance fixée à l'avance.

24. Procédé suivant la revendication 23, **caractérisé en ce que** l'on compense des inductances de fuite au moyen respectivement d'au moins un condensateur (81, 82, 83, 84, 105, 106, 107, 108, C02, C03, C04, C05, C06, C07, C08, C09) de compensation monté en série avec l'élément (92, 93, 94, 95, L01, L02, L03, L04) d'induction respectif.

25. Procédé suivant la revendication 23 ou 24, **caractérisé en ce que** l'on mesure comme valeur de cession de puissance le facteur de puissance dans le circuit du au moins un premier élément (92, 94, L01, L02) d'induction.
